# EUROPEAN PATENT APPLICATION

(11) **EP 2 851 236 A1**
(43) Date of publication of application: **25.03.2015**
(21) Application number: 14404001.1
(22) Date of filing: 26.05.2014
(51) Int. Cl.: B60N 2/015, B60N 2/08, B64D 11/06

(54) **Seat attachment device**

(30) Priority: 28.05.2013 TR 201306358
(71) Applicant: FKT Koltuk Sistemleri Uretim ve Dagitim Sanayi Ticaret A.S., 16140 Nosab/Bursa (TR)
(72) Inventor: Nurkaya, Ramadan, 16130 Nilufer/Bursa (TR)

(57) **Abstract**

The invention relates to a sliding leg mechanism (A) providing longitudinal adjustment of the position of a seat, especially found in passenger transportation vehicles. The mechanism comprises an actuator body (2) with guide grooves (21), which body is rotatable on a main body (1) in order to move a locking component (6) into engagement with a rail on a vehicle floor and to move at least two rolling components (4) away from said rail by motion transmission bars (3) or vice-versa.

## Description

### The Related Art

The invention relates to vehicle seats.

The invention particularly relates to a sliding leg mechanism providing back-and-forth movement of vehicle seats on a rail, gradual transposition of the seat at unlocked (sliding), preparation (fitting), and locked positions, and locking at an ultimate position.

### The Prior Art

Nowadays, some improvements are made in bus, minibus etc. public transportation vehicles in order to make them more convenient for passengers using wheelchairs. When the patents and utility model applications found in the prior art are analyzed, various studies are found for making the active and comfortable use of bus, minibus etc. vehicles by the passengers using wheelchairs.

One of the applications found in he patent literature is the European Patent Application no EP2340798 (A1**).** Said invention is developed to provide an area for the wheelchair used on the vehicle. This area is provided by means of a chassis formed within the transportation vehicle and the floor defining the empty area. The wheelchair is fixed onto this area allocated within the vehicle by means of fixing components.

This invention is formed with the logic of allocating a special area for wheelchairs within the transportation vehicle. However, the possibility of the area being used by a passenger on a wheelchair all the time is low. Therefore, said area can not be effectively used and when there is no passenger on a wheelchair is found on the vehicle, it will only be an empty space with no seat on it. This leads to the waste of the space within the vehicle.

Another improvement made in the known status of the art is the Japanese patent application no JP2011062351 (A**)** disclosing fixing of wheelchairs on the transportation vehicles. Said device enables placement of the wheelchair at an area formed between the window side and the aisle side of the vehicle. In order to perform the placement operation, drawing components are used, which are fixed onto the vehicle and comprise a hook connected to a belt.

In this invention also an area is especially allocated for passengers on wheelchairs, and this area is left empty when no passenger on a wheelchair is found on the vehicle. Besides the loss of space from the vehicle, it also requires fixing of the passenger's wheelchair to the vehicle by means of a fixing component formed of a hook and a belt. This situation would make the control of the wheelchair difficult when the vehicle makes sudden movements.

The American patent application no US2010052386 (B2**)** discloses an embodiment, which provides shifting of the seats within the vehicle, and which requires low maintenance. In this invention, in order to provide placement of the passengers using wheelchairs onto the vehicle, an area is defined with rails on it. At least two seats found on the vehicle moves on the rails in order to form a space wherein the wheelchair can fit into the defined area. The foremost and the rearmost seats of the vehicle are fixed. The other seats except the fixed ones can move back-and-forth on said rails. The area for placement of the passenger on the wheelchair is formed by closing the seating parts of the seats that are brought close to each other. The rails used in the invention are covered with covers in order to prevent from getting dirty.

Said invention has similarity with the purpose of the invention, which will be disclosed in this description. However, the protection area formed by the main claims is defined for seats moving on rails. However, our invention, which, is the subject of this application, relates to a mechanism used for moving and locking the seats on the rails and the two inventions are different from each other at this point. Besides, in the American application, when the seats having their positions changed on the rails are pushed back-and-forth in order to form a space, a structure for fixing the seats is not used. Since the transposed seats are.not fixed, they may break free and leave their positions when the vehicle makes a sudden movement.

As a result; improvement is to be made in a transposition mechanism providing back-and-forth movement of seats on a rail in public transportation vehicles, especially for comfortable positioning of passengers on wheelchairs, and therefore need has occurred for novel embodiments which would eliminate the above said drawbacks and bring in solutions to present problems.

### Purpose of the Invention

The present invention relates to transposition mechanism, which meets the above said requirements, eliminates all of the drawbacks and brings about some additional advantages.

A purpose of the invention is to provide an area for passengers using wheelchairs on public bus, minibus etc. transportation vehicles. The seats found in the vehicle move back-and-forth on a rail mechanism mounted on the vehicle floor. In this way, an area is formed where the passenger with a wheelchair can be positioned.

Another purpose of the invention is to form said area when a passenger on a wheelchair gets on the vehicle, and use of the seats in their original positions when no passenger on a wheelchair is found on the vehicle. By means of forming this area when a passenger on a wheelchair gets on the vehicle, the need for allocating a special area within the vehicle for this purpose is eliminated. In this way, the area on the vehicle can be effectively used.

Another purpose of the invention is to develop a mechanism that enables transposition of the seats on the rail. Said mechanism has a 3-stage operating principle. When the seat is found in the first position, it is locked onto the rails found on the floor. When a passenger on a wheelchair gets on the vehicle, the lock, which engages into the housing found on the rail by means of the rotating movement of the mechanism via a bar, gets out of the housing. In this way, the seat is moved on the rail and the lock is fitted into the lock housings found on the rail when the desired position is reached.

By means of the mechanism of the invention, both the effective use of the area within the vehicle is achieved and the seats can also be fixed again onto the rail at the last position following being moved in order to form a space. In this way, the possibility of the seats moving back onto the passenger on the wheelchair as a result of a sudden movement of the vehicle is eliminated.

In order to achieve above said purposes, the invention is a sliding leg mechanism comprising a main body which comprises the components that enable movement of the driver and passenger seats in vehicles in order to bring them into a desired position, and providing locking by means of at least two changes in position, and it comprises:
- **mechanism body** comprising at least one guide channel providing change of position of the mechanism and at least one transposition surface comprising motion opening,
- **guide bar** that provides changing of the position of said mechanism body with the intervention of the user and that is connected to said at least one transposition surface,
- **two motion transmission bars** symmetrical with each other with regard to y-axis, which are connected to each other by means of the motion transmission pins that move through the guide channels found on the transposition surface that moves with the rotation of said guide bar, comprise two parallel surfaces, and comprise compaction component that is mounted between said surfaces,
- **locking component** that is connected to said motion transmission bar and mechanism body at at least one point and fixing the seat at its location when the locking position is reached,
- **at least two rolling components** providing movement of the mechanism on the rail and connected to said motion transmission bars.

The structural and characteristic features of the invention and all advantages will be understood better in detailed descriptions with the figures given below and with reference to the figures, and therefore, the assessment should be made taking into account the said figures and detailed explanations.

### Brief Description of the Figures

For better understanding of the embodiment of present invention and its advantages with its additional components, it should be evaluated together with below described figures.
**Figure 1****:** is the exploded view of the mechanism, wherein the components of the present invention sliding leg mechanism are shown in detail.
**Figures 2a, 2b****, and** **2c****:** are the views wherein the present invention sliding leg mechanism lock is open. **Figure 2a****,** is the view of the mechanism with cover; **Figure 2b****,** is the view of the mechanism without cover, and **Figure 2c****,** is the view showing the positions of all of the components of the mechanism while the lock is open.
**Figures 3a, 3b****, and** **3c****:** are the views wherein the present invention sliding leg mechanism is in preparation position to be locked. **Figure 3a****,** is the view of the mechanism with cover in preparation position; **Figure 3b****,** is the view of the mechanism with cover in said position; and **Figure 3c****,** is the view showing the positions of the components while the mechanism is in preparation position.
**Figures 4a, 4b****, and** **4c****:** are the views where the present invention sliding leg mechanism lock engages into the locking housing found on the rail on which it moves and then locks. **Figure 4a****,** is the locked view of the mechanism with cover; **Figure 4b****,** is the locked view of the mechanism without cover; and **Figure 4c****,** is a view showing the position where the components of the mechanism are found while it is in locked position.

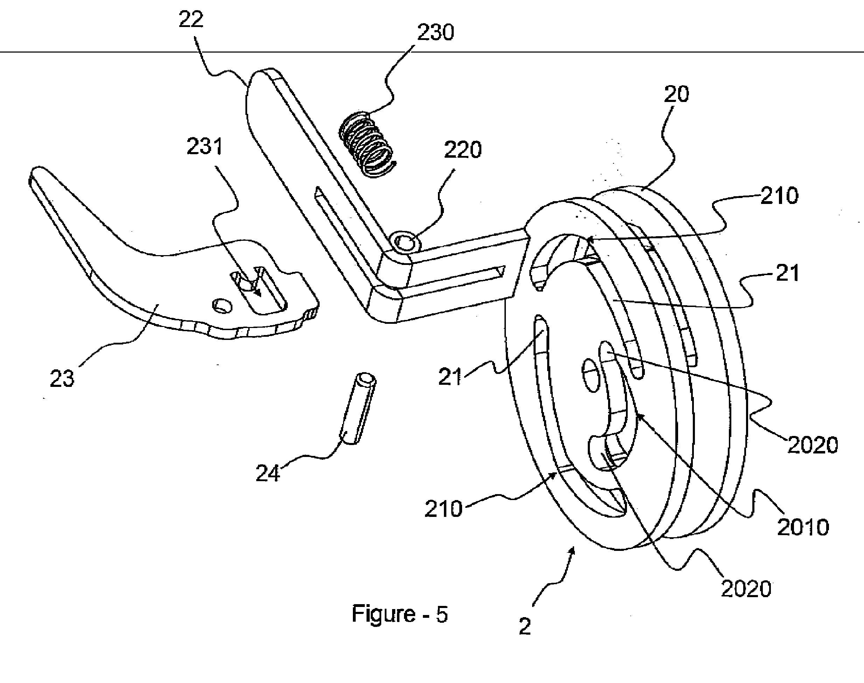

**Figure 5****:** is a representative view of the mechanism body providing motion at the sliding leg mechanism of the invention.

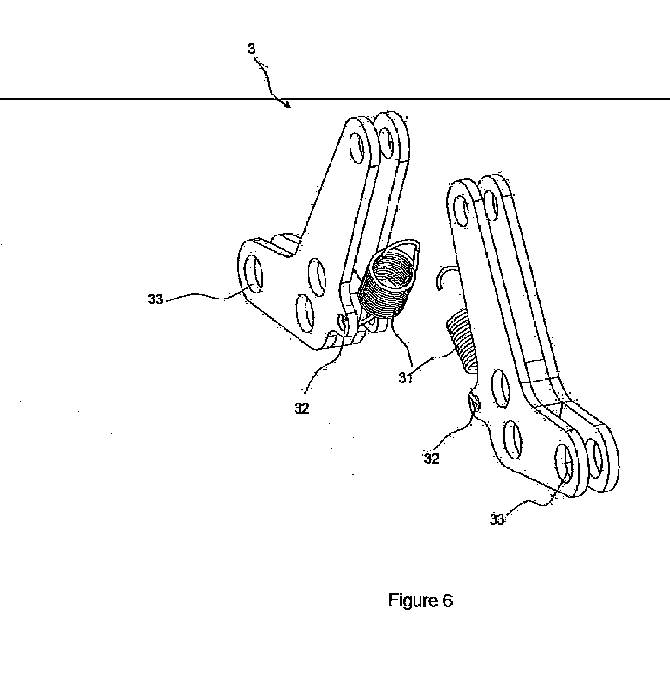

**Figure 6****:** is the perspective view of the bars providing transmission of motion at the sliding leg mechanism of the invention.

Drawings do not have to be scaled and details not necessary for understanding the present invention may be neglected. Moreover, components which are at least widely equal or which have at least widely equal functions are shown with the same number.

### Reference Numbers

**A.** Sliding leg mechanism
   **1.** Main body
      **11**. Base surface
         **110.** Rolling component housing
         **111.** Assembly piece housing
      **12.** Upper surface
         **120.** Connection housing
      **13.** Fixing piece
         **130.** Connection hole
   **2.** Mechanism body
      **20.** Transposition surface
         **201.** Motion opening
            **2010.** Breaking point
            **2020.** Stopper surfaces
      **21.** Guide channels
         **210.** Breaking points
      **22.** Guide bar
         **220.** Pin housing
         **221.** Safety bar opening
      **23.** Safety bar
         **230.** Compaction component
         **231.** Compaction component housing
      **24.** Assembly pin
   **3.** Motion transmission bar
      **31.** Compaction component
      **32.** Compaction component connection housing
      **33.** Assembly housing
      **34.** Motion transmission pin
   **4.** Rolling component
      **41.** Assembly housing
   **5.** Bottom piece
      **51.** Lock housing
      **52.** Rolling component assembly piece
   **6.** Locking component
      **61.** Lock bolt
      **62.** Assembly pin connection housing
      **63.** Motion transmission pin connection housing
      **64.** Compaction component connection housing
   **7.** Cover
      **71**. Motion opening
      **72.** Locking slot
   **8.** Assembly pin
      **I**. Sliding position
      **II**. Preparation position
      **III**. Locked position

### Detailed Description of the Invention

In this detailed description, the preferred embodiments of the sliding leg mechanism (A), which is the subject of the invention, will only be disclosed for better understanding of the subject, and will not form any limiting effect.

The invention relates to a sliding leg mechanism (A) which provides adjustment of the seat distance for the user and is assembled at the lower part of said seats.

The sliding leg mechanism (A) of the invention, it its basic form, comprises:
- a main body (1) preserving the mechanism (A),
- mechanism body (2) positioned within said main body (1) and providing motion to the mechanism (A),
- guide bar (22) that is connected to said mechanism body (2) and moves the mechanism body (2) with the intervention of the user,
- at least one motion transmission bar (3) that enables changing the position of the mechanism (A) by means of the motion transmission pins (34) moving in the guide channels (21) found on the transposition surfaces (20) of the mechanism body (2) mounted on the main body (1),
- at least one rolling component (4) connected to said motion transmission bar (3) and enabling motion of the mechanism (A) on the rails,
- a bottom piece (5) connected to the main body (1) through the assembly piece housing (111) formed on the main body (1) base surface (11),
- locking component (6) providing locking of the mechanism (A) at the desired position by engaging into the lock housing (51) formed at the said bottom piece (5), and
- cover (7) that covers the main body (1) comprising the mechanism body (2) and said parts.

In order to understand the sliding leg mechanism (A) of the invention clearly, it is important know all the components comprised by the mechanism (A) and the relationship of said components with each other. These descriptions will be made with reference to above said figures, which are representative illustrations given as examples only for better description of the mechanism (A).

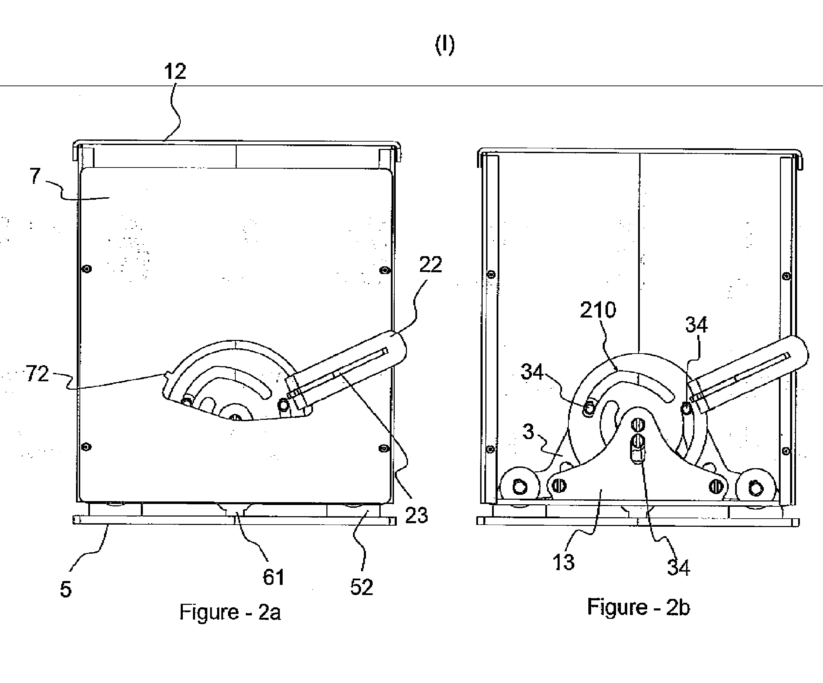

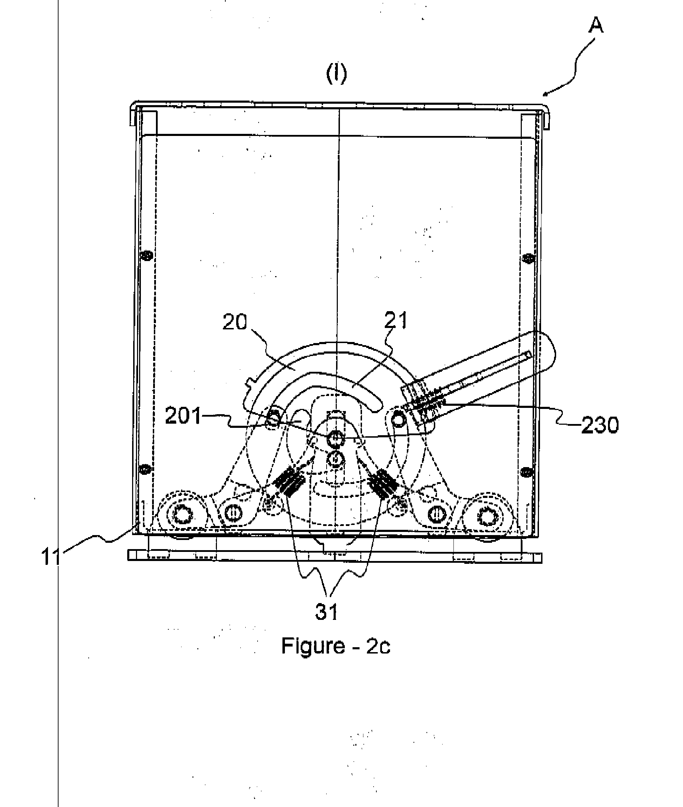

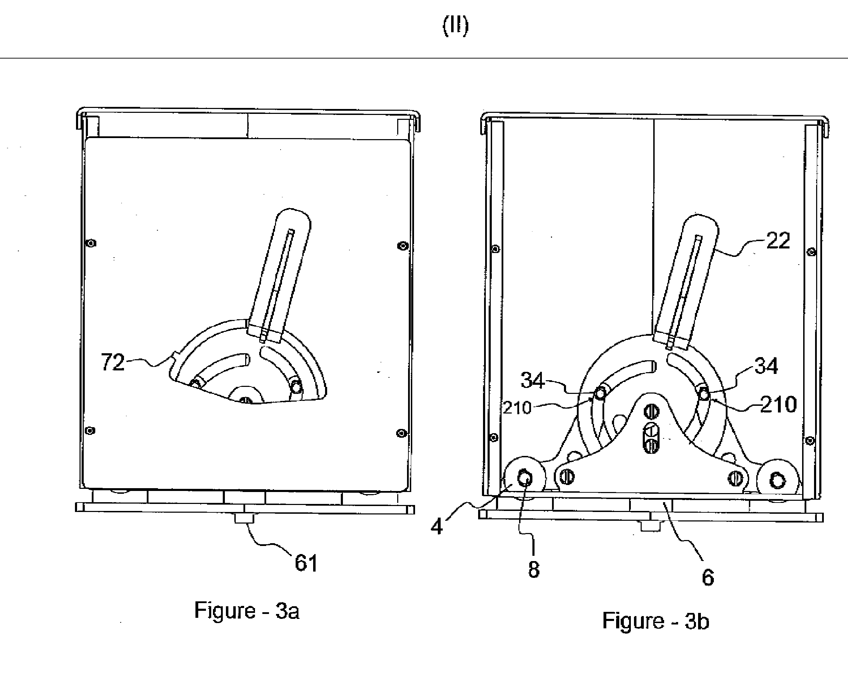

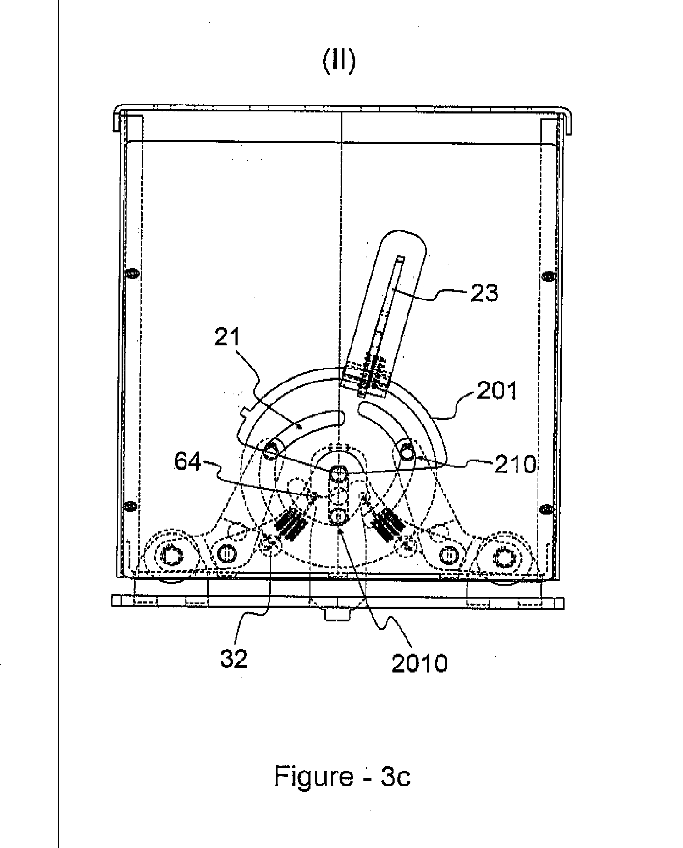

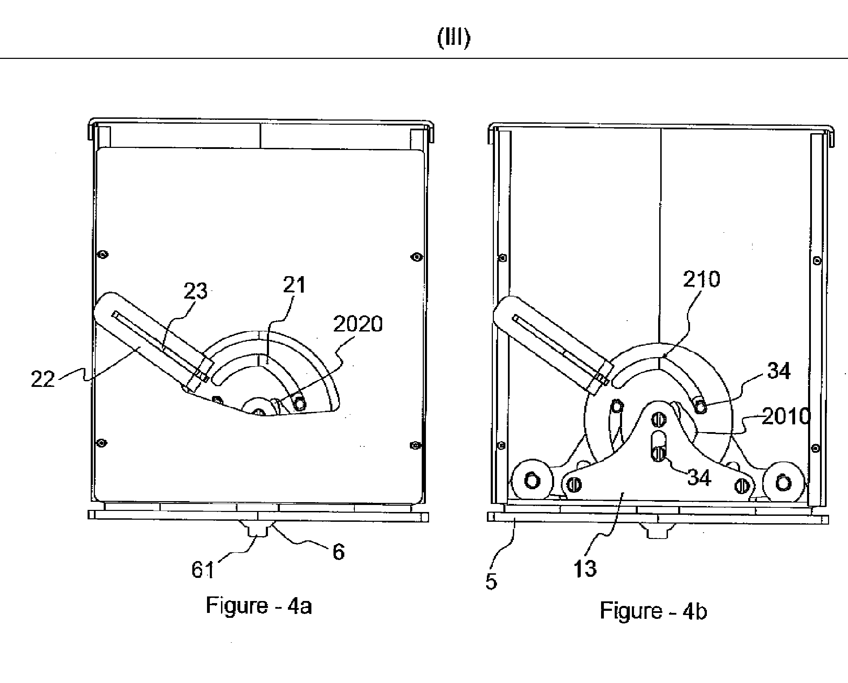

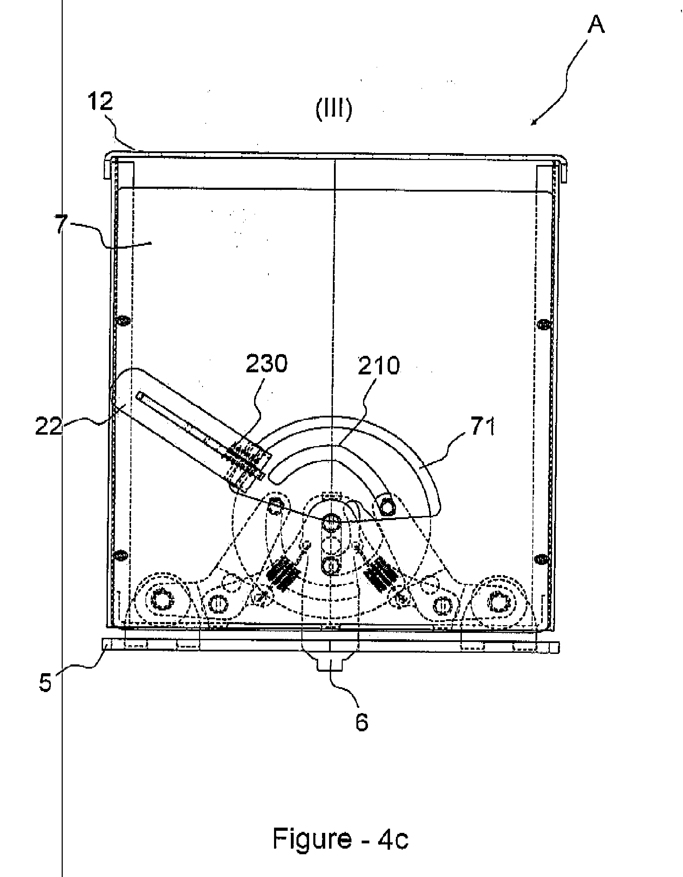

Said sliding leg mechanism (A) allows 3 different motions by means of the guide bar (22) found on it. These positions are: sliding position (I), preparation position (II), and locked position (III). At the ***Sliding position (I)**,* the locking component (6) does not get out of the lock housing (51) found at the bottom piece (5) (stays in the body), and thus the seat can move towards the desired position within the rail on which the mechanism (A) moves (Figures 2a, 2b, 2c, and 2d). At the ***Preparation position (II)**,* when the seat arrives at the desired position, said locking component (6) moves downward such that it would be retained at the first locking hole found on the rail where the seat moves (Figures 3a, 3b, 3c, and 3d). At this position (II), the locking component (6) is fixed at the first locking housing it encounters and the locking operation is completed at the ***locked position (III),*** which is the last position (Figures 4a, 4b, 4c, and 4d). Following describing the relationship of the parts with each other, more detailed descriptions will be made about said positions (I, II, III).

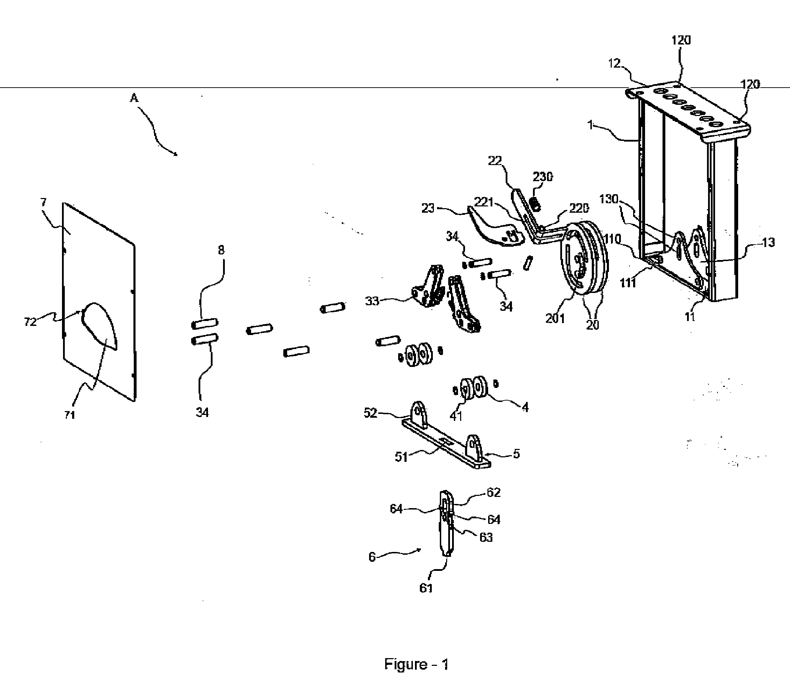

In Figure 1, the exploded perspective view of the sliding leg mechanism (A) of the invention is given. The parts and their functions will be disclosed in detail with reference to this figure.

Main body (1) is obtained by combining a base surface (11) and an upper surface (12) that are in parallel with each other, by means of side surfaces at their both sides, which are also in parallel with each other. On the said base surface (11), at least one assembly piece housing (111) is found, where assembly pieces (52) fit in order to provide assembly of the bottom piece (5) with the main body (1). Rolling component housings (110), into which the rolling components (4) fit, are formed at the front and rear side of said assembly piece housing (111). Preferably two units of these rolling component housings (110) are formed, while at least one can be applied for various applications. Said housings (110, 111) are formed at the two ends of said base surface (11) such that they would be symmetrical with regard to the vertical axis. Said main body (1) upper surface (12) comprises at least one connection housing (120) which provides assembly of the mechanism (A) with the seat.

Two fixing pieces (13) are fixed on the base surface (11) in parallel to and in a distance from each other such that they would allow connection of said mechanism body (2) between them. Fixing piece (13) can be connected to the base surface (11) by means of welding or a fixing component. Mechanism body (2) is fixed on the main body (1) by means of the locking component (6) through the connection holes (130) formed on said fixing piece (13).

Mechanism body (2) comprises two parallel transposition surfaces (20) at a distance from each other and an "L-shaped" guide bar (22) connecting these surfaces (20) with each other. Curvilinear guide channels (21) are found on said transposition surfaces (20). At least two guide channels (21) are formed reciprocally such that their inward-curved faces would face each other. The motion transmission pins (34) moving along these channels (21) and providing mounting of the pieces with each other with the rotating motion of the transposition surfaces (20) in line with the motion provided to the mechanism body (2), at the same time provides connection of the motion transmission bars (3) and the transposition surfaces (20) with each other.

These guide channels (21) form one of the most significant characteristics of the invention. As mentioned above, the sliding leg mechanism (A) provides locking by going through three positions (I, II, III). Transition between these positions (I, II, III) is achieved thanks to the structure of the guide channels (21). When the mechanism body (2) is moved by means of the guide bar (22), said motion transmission pins (34) move within the guide channels (21). However, in order to let the user know that a position (I, II, III) is completed and the other position (I, II, III) has to be started, breaking points are formed on said guide channels (21). When breaking point (210) is reached following a motion, the motion transmission pin (34) stops at this point and warns the user to start the next motion. Because of said breaking points (210), the guide channels (21) do not have a frame that follow a curvilinear line. Breaking points (210) are found at and form a protrusion at the center or close to the central part of the channels (21).

Another important characteristic of the invention is the motion opening (201) found on said transposition surfaces (20). Another motion transmission pin (34) providing connection of the locking component (6) and the fixing pieces (13) move along the said motion opening (201) in line with the motion of the mechanism body (2). This opening (201) also comprises breaking point (2010) at its center or close to its central part similar to the guide channels (21) and comprises stopper surfaces (2020) stating the end points where the pin (34) contacts in the opening (201). When the motion pin (34) moving through the guide channels (21) arrive at the breaking point (210), the motion pin (34) moving along the motion opening (201) also arrives at the breaking point (2010). Besides, when the end points of the guide channels (21) are reached, the pin (34) found at the motion opening (201) contacts with the stopper surfaces (2010) and ends the motion.

While the connection of the transposition surfaces (20) with each other is achieved by means of said guide bar (22), it is also made by means of the pins through the connection housings found on the pieces that are connected to each other. On the guide bar (22), one pin housing (220) is found at the corner forming the "L-shaped" structure and an opening (221) is found on the surface of the bar (22). Safety bar (23) fits into said opening (221). Said safety bar (23) is used in order to maintain the position of the sliding leg mechanism (A) after it is locked and thus avoid external intervention.

On this safety bar (23) is found a pin housing and compaction component housing (231). A compaction component (230) is mounted to this compaction component housing (231). The connection between the guide bar (22) and the safety bar (23) is made by means of an assembly pin (24) passing through the pin housings (220) found on the guide bar (22) and the safety bar (23). In order to bring the mechanism (A) into the sliding position (I) from the locked position (III), the safety bar (23) positioned on the said opening (221) is lifted above and the guide bar (22) is activated.

Two motion transmission bars (3) are connected between said transposition surfaces (20) providing the motion required during transition between the positions (I, II, III). Each motion transmission bar (3) is an "L-shaped" structure having wide angle between its surfaces, they are formed of two parallel pieces. On the reciprocal transmission bars (3), compaction component connection housings (32) are formed at the parts facing each other on each bar (3) in order to provide the connection of the compaction components (31). One end of said compaction component (31) is fitted on this connection housing (32), while the other end is fitted on the compaction component connection housing (64) formed on the locking component (6). In this way, a connection is formed between the bottom piece (5) locking component (6) and the motion transmission bars (3).

Motion transmission bars (3) are the components that provide relationship between all the components of the mechanism (A). Motion transmission pin (34) changing its position within the guide channels (21) goes through the connection holes at the upper end of the bars (3). While said bar (3) is connected to the fixing piece (13) by means of one of the lower connection holes, it is connected to the rolling component (4) and the rolling component assembly piece (52) by means of the other assembly housing (33). Therefore, mounting of the bottom piece (5) to the main body (1) through the base surface (11) is achieved by means of the motion transmission bars (3). While the motion transmission bars (3) go into the locked position (II) from the sliding position (I), it moves outwards at a certain amount via said compaction components (31).

The bottom piece (5), which is briefly described above, is the inner part of the rail which enables movement of said sliding leg mechanism (A) on the rail. The bottom piece (5) comprises at least one lock housing (51) for fitting of at least one locking component (6), and assembly pieces (52) for fitting of rolling components (4) onto the motion transmission bars (3). Said mounting pieces (52) form protrusion at both sides of the bottom piece (5) such that it would enter into the main body (1) when fitted.

The rolling components (4) are connected to both sides of the assembly piece (52) by means of a fixing component through the assembly housing (41) found its center.

The locking component (6) comprises a connection housing (63) having a lower end part that is narrower than its body, into which the motion transmission pin (34) fits, and another connection housing (62), into which the assembly pin (8) fits. At the region that is close to the upper end of the locking component (6), the compaction component connection housing (64), to which one end of the compaction components (31) connected to the motion transmission bars (3) are found. They are formed at both sides of the lower end of said assembly pin connection housing (62) as two units, such that it would be equal to the number of motion transmission bar (3) compaction components (31), wherein connection is formed between the bottom piece (5), locking component (6), motion transmission bars (3), and the main body (1) by means of said housings (64).

The sliding leg mechanism (A) of the invention comprises a cover (7) covering the components that form the mechanism (A). A motion opening (71), enabling intervention on the guide bar (22) by a user, is found on the said cover (7). The guide bar (22) and the safety bar preventing unintentional intervention on the guide bar (22) move along this motion opening (71). Since the guide bar (22) motion is circular, it is preferably formed in circular, especially in semi-circular shape. A locking slot (72) is found on said semi-circular motion opening (7). When the mechanism (A) is brought into locked position, this safety bar (23) fits into said locking slot (72).

### The way of operation of the present invention sliding leg mechanism (A) is as follows:

**Sliding position (I):** When the mechanism (A) is in this position, the seat is shifted and brought into the desired position. Said mechanism (A) can move on the rails until it is brought to the appropriate position where locking would be made. In order to achieve this, the bolt (61) of the locking component (6) stays in the mechanism (A). One of the guide channels (21) is found at the upper and the other one is found at the lower position. In this case, the motion transmission pins (34) are in contact with the stopper surfaces (2020) within the guide channels (21). Among the motion transmission pins (34), the one found at the right hand side contacts with the upper stopper surface (2020) of the lower guide channel (21), while the one found at the left hand side contacts with the lower stopper surface (2020) of the upper guide channel (21). The terms of lower and upper stopper surfaces (2020) are used according to the view of the mechanism (A) given in Figure 2a.

The compaction components (31) connected with the motion transmission bars (3) and the locking component (6) are in their primary positions.

**Preparation position (II**): In this position, when the seat arrives at the desired position on the rail during the sliding position (I), the purpose is to start the operation of fixing position by means of the lock bolt (61). When the seat is brought to the desired position, the lock bolt (61) protrudes outwards from the bottom piece (5) by means of the guide bar (22) in order to start the locking operation. This motion is obtained by leftward circular motion of the guide bar (22). The amount of protrusion of the lock bolt (61) from the bottom piece (5) for the preparation position (II) is restricted by the breaking points (210) found on the guide channels (21), along which the motion transmission pins (34) move. This is achieved by means of the motion opening (201) that is formed on the transposition surface (20) and allows movement of the locking component (6). When the pins (34) found on the guide channels (21) arrive at the breaking point (210) with the leftward circular motion of the guide bar (22), the motion transmission pin (34) found at the said motion opening (201) also reaches the breaking point (2010) found at this opening (201). In this way, the motion transmission pins (34) can be stopped at the same time in order to state that the preparation position (II) is taken.

The amount of protrusion of the lock bolt (61) from the bottom piece (5) is at the same time achieved by means of the assembly pin connection housing (62) formed on the locking component (6). Assembly pin connection housing (62) has a vertical opening shape wherein a pin (8) moves with the movement of the locking component (6). With the motion of the guide bar (22), assembly pin (8) is positioned at the upper or the lower part of said housing (62). When the assembly pin (8) is in contact with the upper point of said housing (62), the lock bolt (61) its only in contact with the bottom piece (5) and it does not protrude from the bottom piece (5). When it contacts with the lower part of said housing (62), the lock bolt (61) takes position for the preparation position (II) and protrudes from the bottom piece (5). The distance between the upper end and the lower end of the housing (62) is another factor that determines the amount of protrusion of the lock bolt (61) from the bottom piece (5). Protrusion of the lock bolt (61) in an amount that is adjusted with the characteristics of the pieces causes the seat enter into the first locking hole it would encounter on the rail, on which it moves.

In this position (II), the guide channels (21) are reciprocally positioned along y-axis and said breaking points (210) face each other (Figure 3c).

**Locked position (III)**: In the preparation position (II) said lock bolt (61) partially enters into the locking hole formed on the rail, on which the seat is movable. The guide bar (22) is rotated with a leftward rotational motion until it contacts with the end point of the motion opening (71) found on the cover (7).

Said motion opening (71) comprises at least one locking slot (72) at its end point formed for locking. The safety bar (23) that is connected to the guide bar (22) by means of a pin (24) and compaction component (230) is fixed by engaging into said locking slot (72) and thus prevents the guide bar (22) from being actuated by unintentional interventions.

At this moment, the positions of the components forming the mechanism (A) also change. The motion transmission bars (3) come close to each other through compaction components (31), the bottom piece (5) is withdrawn towards the base surface (11) of the main body (1), and in this way, the locking component (6) is pushed outwards from the lock housing (51) found at the bottom piece (5). The guide channel (21) that is found below the transposition surface (20) during the sliding position (I) is then found at above in this position (III), while the other guide channel (21) is positioned bellow. The locking operation is completed when the motion transmission pins (34) contact the stopper surfaces (2020) of these channels (21). Motion transmission pin (34) leans against the stopper surface (2020) of the motion opening (201) found on the transposition surface (20). Assembly pin (8) is found at the topmost point of the assembly pin connection housing (63).

In order to bring said sliding leg mechanism (A) into the sliding position (I) from the locked position (III), said safety bar (23) has to be taken out of the locking slot (72). In order to do this, withdrawal of the safety bar (23) outwards by making use of the compaction component (230) that is connected to the compaction component housing (231) of the safety bar (23) would be enough. In this way, the guide bar (22) is freed and then rotated towards the right hand side in order to take its first position (I).

In this detailed description, the terms "leftward or rightward circular motion" are disclosed according to above said figures. In other embodiments of the invention, the guide bar (22) might be positioned on the left for the sliding position (I). In this case, the transition to the locking position (III) should be made by means of the left-to-right circular motion of the guide bar (22).

The motion transmission pins (34) do not become idle and move within the guide channels (21) and motion opening (201) found on the transposition surface (20). Said pins (34) both provide connection between the pieces and also change places within the channels (21) and the opening (201) in order to complete the transition between positions. And this is achieved by means of the movement of the pieces.

## Claims

1. The invention is a sliding leg mechanism (A) comprising a main body (1) which comprises the components that enable back-and-forth movement of the seats of transportation vehicles on a rail in order to provide an empty area within the vehicle, and providing locking by means of at.least two changes in position (I, II, III), and it is **characterized in that;** it comprises:
- **mechanism body (2)** comprising at least one guide channel (21) providing change of position of the mechanism (A) and at least one transposition surface (20) comprising motion opening (201),
- **guide bar (22)** that provides changing of the position of said mechanism body (2) with the intervention of the user and that is connected to said at least one transposition surface (20),
- **two motion transmission bars (3)** symmetrical with regard to y-axis, which are connected to each other by means of the motion transmission pins (34) that move through the guide channels (21) found on the transposition surface (20) that moves with the rotation of said guide bar (22), comprise two parallel surfaces, and comprise compaction component (31) that is mounted between said surfaces,
- **locking component (6)** that is connected to said motion transmission bars (3) and mechanism body (1) at least one point and fixing the seat at its location when the locking position is reached,
- **at least two rolling components (4)** providing movement of the mechanism (A) on the rail and connected to said motion transmission bars (3).

2. Sliding leg mechanism (A) according to claim 1, and it is **characterized in that;** it comprises at least two transposition surfaces (20) in parallel to each other and having a space between, to where the motion transmission bar(s) (3) would be connected.

3. Sliding leg mechanism (A) according to claim 1, and it is **characterized in that;** said mechanism (A) comprises:
- sliding position (I), wherein the seat is movable on a rail in order to be brought into a desired position and the locking component (6) is found within the main body (1),
- preparation position (II), wherein the locking bolt (61) forming the lower end of the locking component (6) fits into the appropriate locking hole found on the rail by means of rotation of the guide bar (22) when the desired position is reached, and
- locking position (III), wherein the lock bolt (61) found in said position completely engages into the locking hole and provides locking.

4. Sliding leg mechanism (A) according to claims 1 to 3, and it is **characterized in that; it** comprises at least one fixing piece (13) connected to the base surface (11) of the main body (1) in order to provide connection of said mechanism body (2) with the main body (1).

5. Sliding leg mechanism (A) according to claim 5, and it is **characterized in that;** said fixing piece (13) comprises:
- at least one connection hole (130) through which the motion transmission pin (34) passes, which provides connection between the locking component (6) and the transposition surfaces (20) and transmission of motion between the positions (I, II, III).

6. Sliding leg mechanism (A) according to claims 1 to 5, and it is **characterized in that;** the guide channel (21) formed on said transposition surfaces (20) comprises:
at least one breaking point (210) which provides stopping of the motion transmission pin (34) moving through said guide channels (21) during transition from the sliding position (I) into the preparation position (II) in order to show that the transition between positions is complete.

7. Sliding leg mechanism (A) according to claims 1 to 6, and it is **characterized in that;** the motion opening (201), which connects the locking component (6) and the transposition surfaces (20) with each other and takes role in the change of position (I, II, III), and wherein the motion transmission pin (34) moves with the motion of the transposition surfaces (20), comprises at least one breaking point (2010).

8. Sliding leg mechanism (A) according to claims 6 and 7, and it is **characterized in that;** when the motion transmission pins (34) found at the guide channels (21) fit into the breaking point (210), the motion transmission pin (34) found at the motion opening (201) also fit into the breaking point (2010).

9. Sliding leg mechanism (A) according to claims 1 to 8, and it is **characterized in that;** it comprises at least one safety bar (23), which is connected to the guide bar (22) through an opening (221) formed on the surface(s) of the guide bar (22), and which provides maintaining the fixed position of the mechanism (A) at the locking position (III).

10. Sliding leg mechanism (A) according to claims 1 to 9, and it is **characterized in that;** it comprises cover (7) covering the components found in the main body (1) and comprising:
- a motion opening (71) enabling the motion of said guide bar (22) during the transition between the positions (I, II, III), and
- at least one locking slot (72), wherein said safety bar (23) is fitted into the locking positioned (III).

11. Sliding leg mechanism (A) according to claims 1 to 10, and it is **characterized in that;** it comprises at least one compaction component (230), which:
- frees the guide bar (22) by means of lifting of said safety bar (23) during transition of the mechanism (A) from the locking position (III) into the sliding position (I), and
- is placed into the housing (231) formed on said safety bar (23).

12. Sliding leg mechanism (A) according to claims 1, 3, and 5, and it is **characterized in that,** said locking component (6) comprises:
- at the motion opening (201) of the transposition surface (20), a connection housing (63), through which the motion transmission pin (34) changing its position in line with the motion of said surface (20) passes,
- at least one assembly pin connection housing (62), through which the assembly pin (8), providing connection of the transposition surfaces (20) and the locking component (6), passes, and which determines the amount of pushing of the locking component (6) out of the main body (1) according to the distance between its lower and upper ends,
- at least one assembly pin connection housing (62) having length and opening in vertical direction, and
- at least one compaction component connection housing (64), to which an end of the compaction component (31) is connected, while the other end is connected to the motion transmission bar (3) by means of at least one compaction component connection housing (32) formed on the said bar (3).

13. Sliding leg mechanism (A) according to claims 1 to 12, and it is **characterized in that;** it comprises a bottom piece (5), which is fitted on the main body (1) by means of the base surface, includes:
- locking component housing (51), into which said locking component (6) is fitted,
- at least one assembly piece (52), to which the motion transmission bars (3) and the rolling components (4), which provide movement of the mechanism (A) on the rails where the seat moves, are connected, and
- one each assembly' pieces (52) positioned at the right and left ends of said bottom piece (5), and locking component housing (51) formed between said assembly pieces (52).

14. Sliding leg mechanism (A) according to claims 4 and 13, and it is **characterized in that;** said base surface (11) comprises:
- at least two rolling component housing (110), into which said rolling components (4) fit, and
- at least one assembly piece housing (110), into which the assembly piece (52) fits.

15. Sliding leg mechanism (A) according to claims 1 to 15, and it is **characterized in that;**
- in the first position, the seat is locked at the rails found on the vehicle floor,
- by means of rotating the motion transmission pins (34) via the guide bar (22) up to the ending point of the guide channels (21), complete removal of the locking component (6) from the housing found on the rail and transition of the mechanism (A) into sliding position (I),
- when the locking position of the seat comes close, the guide bar (22) is rotated in opposite direction to the first rotating motion and the mechanism (A) goes into preparation position (II), where the appropriate locking housing found on the rail is determined with the lock bolt (61) moving out of the body (1) while the seat is being moved, and
- when said lock bolt (61) contacts the locking housing found at the desired position, the guide bar (22) is again rotated in opposite direction to the first motion and the locking component (6) fits into the housing and thus the mechanism (A) is brought into locking position (III) and the seat is locked at its first and last positions.
